# FASCICULE DE BREVET EUROPEEN

(11) **EP 3 986 844 B1**
(45) Date de publication et mention de la délivrance du brevet: **30.07.2025**
(21) Numéro de dépôt: 20733939.1
(22) Date de dépôt: 17.06.2020
(51) Int. Cl.: C05F 11/00

(54) **COMPOSITION ET MÉTHODE POUR AMÉLIORER LA CROISSANCE DE PLANTES**
ZUSAMMENSETZUNG UND VERFAHREN ZUR VERBESSERUNG DES PFLANZENWACHSTUMS
COMPOSITION AND METHOD FOR IMPROVING PLANT GROWTH

(30) Priorité: 18.06.2019 FR 1906513
(43) Date de publication de la demande: 27.04.2022
(73) Titulaire: Algaia, 29870 Lannilis (FR)
(72) Inventeur: BRÉBION, Jérémy, 14120 CHEUX (FR); HENNEQUART, Franck, 14200 HÉROUVILLE-SAINT-CLAIR (FR)
(74) Mandataire: Flesselles, Bruno F.G.
(86) Numéro de dépôt international: PCT/EP2020/066766
(87) Numéro de publication internationale: WO 2020/254407

(56) Documents cités:
- FR-A1- 3 025 699
- GB-A- 2 408 045
- JP-A- 2017 226 548
- WANG DAMAO ET AL: "Effective production of fermentable sugars from brown macroalgae biomass", APPLIED MICROBIOLOGY AND BIOTECHNOLOGY, SPRINGER BERLIN HEIDELBERG, BERLIN/HEIDELBERG, vol. 100, no. 22, 29 September 2016 (2016-09-29), pages 9439 - 9450, XP036081198, ISSN: 0175-7598, [retrieved on 20160929], DOI: 10.1007/S00253-016-7857-1
- ABDEL-FATTAH A F ET AL: "COMPOSITION OF SOME BROWN ALGAE AS INFLUENCED BY SEASONAL VARIATION", PHYTOCHEMISTRY (OXFORD), vol. 9, no. 4, 1970, pages 721 - 724, XP002797985, ISSN: 0031-9422
- WAJAHATULLAH KHAN ET AL: "Seaweed Extracts as Biostimulants of Plant Growth and Development", JOURNAL OF PLANT GROWTH REGULATION., vol. 28, no. 4, 8 May 2009 (2009-05-08), US, pages 386 - 399, XP055133661, ISSN: 0721-7595, DOI: 10.1007/s00344-009-9103-x

## Description

L'invention se rapporte à une composition contenant un extrait d'algues brunes et son utilisation en tant que biostimulant pour stimuler la croissance des plantes par stimulation de la croissance de certaines bactéries présentant un effet avantageux pour les plantes.

Il est actuellement nécessaire de développer des nouveaux produits afin d'augmenter le rendement des cultures, tout en diminuant l'impact sur l'environnement. La nature de la faune et de la flore des sols agricoles s'avère importante pour ces questions, et notamment la présence de certains micro-organismes permettant une meilleure fertilité des sols, ou réduisant la toxicité des métaux lourd tels que le nickel et le cobalt. Ces microorganismes peuvent être détruits par les produits phytosanitaires actuels (désherbants, fongicides ou herbicides).

La bactérie *Bacillus megaterium* par exemple, permet une meilleure solubilité du phosphore, et la fixation de l'azote dans les sols est facilitée par *Rhizobium leguminosarum* ou *Azotobacter vinelandii.* Cependant, il existe différents types de sols qui ne sont pas constitués des mêmes populations microbiennes avec une diversité et une abondance pouvant grandement différer.

Il est donc nécessaire d'identifier des produits d'origine naturelle qui puissent être adaptés à différents types de sols, c'est-à-dire notamment qui puissent agir sur différents types de micro-organismes.

Selon une définition validée par la Commission Européenne, les biostimulants se définissent comme des substance(s) et/ou micro-organisme(s) dont la fonction, lorsque appliqués aux plantes ou à la rhizosphère, est la stimulation des processus naturels qui favorisent/améliorent l'absorption ou l'utilisation des nutriments, la tolérance aux stress abiotiques, la qualité ou le rendement de la culture, indépendamment de la présence de nutriments.

Ainsi, l'action du biostimulant n'est pas uniquement liée à sa composition, mais également à l'effet qu'il aura sur la plante en tant que telle ou son environnement.

Certains extraits d'algues, notamment à base d'algues brunes du genre *Fucus* sont disponibles à la vente en tant que biostimulants. Une majorité des formulations proviennent d*'Ascophyllum nodosum,* les techniques d'extraction étant variables. Les principes actifs présents dans les biostimulants à base d'algues sont généralement similaires mais leurs composition et fonctionnalité dépendent de la nature de la matière première, ainsi que de la méthode d'extraction.

FR3025699A décrit un extrait d'algue concentré, un procédé de préparation et ses utilisations en tant qu'engrais liquide ou en enrobage de semences. L'extrait est obtenu par broyage d'algues jusqu'à éclatement cellulaire, homogénéisation du broyat en solution aqueuse, séparation de l'alginate et de la cellulose par floculation et filtration, ajustement du pH et concentration afin d'obtenir un pourcentage en matières sèches compris entre 6% et 100%. Cet extrait est indiqué comme étant directement efficace sur les plantes, et il n'est pas précisé qu'il puisse avoir un effet positif sur les bactéries du sol favorables à l'augmentation du rendement. Par ailleurs, le procédé décrit diffère du procédé mentionné dans la présente demande par l'absence d'étape de suspension en milieu acide, ou par l'absence de floculation des fibres alginates et cellulose comme évoqué dans FR30255699A. Les extraits obtenus par le procédé de FR3025699A ne contiennent pas les mêmes proportions de principes actifs que celles décrites dans la présente demande.

JP2017226548A décrit une poudre d'algues brunes, telles que des laminaires. Cette poudre est obtenue par broyage des algues. Elle est ensuite resuspendue dans dans un acide organique et est utilisée en tant qu'engrais. Ce document ne mentionne pas le fait que la composition utilisée peut avoir un effet sur les bactéries du sol. Par ailleurs, le procédé décrit dans ce document ne comprend pas d'étape d'extraction, et la composition n'est donc pas un extrait concentré dans les différents composants actifs. En particulier, du fait que la composition de ce document est une poudre d'algue entière, les concentrations en mannitol, laminaranes et fucoidanes sont inférieures à celles décrits plus bas. La poudre de ce document, contient également des éléments non solubles tels que la cellulose.

Abdel Fattah et al (Phytochemistry, Volume 9, Issue 4, 1970, p721-724) se rapporte à la composition des algues brunes. Il divulgue que les laminaires contiennent des laminaranes et du mannitol dans des proportions très variées et que celles-ci changent en fonction des saisons (tableau 1). Ce document ne décrit pas la composition spécifique, qui va au-delà de la simple purification de composés d'algues, et qui contient des pourcentages spécifiques de chacun des composants telle que décrite dans la présente demande, ni le fait qu'une telle composition puisse être utilisée pour favoriser la croissance de bactéries du sol.

GB2408045A décrit un procédé pour obtenir des extraits d'algues, qui diffère des procédés décrits dans la présente demande en termes de pH, temps, températures, pression. En effet, il apparaît (page 8, ligne 1, ou page 12, lignes 6-17) que le temps d'exposition à l'acide est inférieur à une heure. Par ailleurs, ce document se rapporte à une composition pour conditionner le sol « soil conditioning composition », obtenu par extraction alcaline. Cette composition ne contient pas les mêmes concentrations que celles listées ci-après des composants d'intérêt.

Khan et al (JOURNAL OF PLANT GROWTH REGULATION.,vol. 28, no. 4, 2009, p386-399) est une revue se rapportant l'utilisation d'algues en tant qu'agents biofertilisants, et discutant des éléments actifs présents dans ces algues. Ce document ne mentionne pas les extraits particuliers, ni les procédés décrits ci-après.

L'invention se rapporte à un nouvel extrait d'algues brunes, qui présente des propriétés avantageuses pour la croissance de bactéries généralement présentes dans les sols. Ainsi, cet extrait d'algues peut être utilisé en tant que biostimulant, par application sur le milieu de culture ou les sols, afin de permettre une meilleure croissance des plantes, grâce aux bactéries favorables stimulées par cet extrait. Il peut être intégré dans une composition biostimulante, avec des excipients ou d'autres principes actifs. On peut aussi utiliser l'extrait dans une composition de biocontrôle, dans laquelle l'extrait est combiné avec des bactéries PGPR (acronyme de *Plant Growth Promoting Rhizobacteria,* rhizobactéries favorisant la croissance des plantes), afin de stimuler la croissance de ces bactéries.

Cet extrait a été obtenu par extraction acide d'un broyat d'algues brunes, suivie d'une extraction complémentaire du rétentat récupéré.

Cet extrait contient des éléments permettant une stimulation de la croissance de bactéries favorables à la croissance de la plante, en particulier *Bacillus megaterium, Pseudomonas fluorescens, Pseudomonas fulva* et *Arthrobacter agilis.* Ces bactéries présentent un effet PGPR (*Plant-Growth Promoting Rhizobacteria*)*,* c'est-à-dire qu'il s'agit de bactéries colonisant les racines des plantes et favorisant leur croissance.

L'invention se rapporte ainsi à un extrait d'algues brunes, caractérisé en ce qu'il comprend entre 15 et 25% de mannitol, entre 35 et 45% de laminaranes et entre 20 et 30% de fucoidanes. Les autres composés présents (généralement entre 10 et 15%) dans cet extrait sont des composés, notamment inorganiques, variés (ou des composés organiques, en particulier des polysaccharides tels que de l'acide alginique ou des alginates). Ainsi qu'indiqué dans les exemples, les pourcentages sont exprimés en poids par rapport à la matière sèche.

D'une façon plus générale, l'invention se rapporte à une composition comprenant entre 15 et 25% de mannitol, entre 35 et 45% de laminaranes et entre 20 et 30% de fucoïdanes, et préférentiellement entre 5 et 20% d'autres composés organiques ou inorganiques (en particulier des alginates/acide alginique, et/ou des peptides et/ou des acides aminés et/ou des lipides et/ou des minéraux), de préférence entre 10 et 15% de ces autres composés. Si la composition ne contient aucun autre composé, elle comprend préférentiellement entre 19 et 31 % de mannitol, entre 39 et 56% de laminaranes et entre 22 et 33% de fucoïdanes, et 0% d'autres composés, afin de maintenir les rapports entre composés ci-dessous.

Le rapport Laminaranes/Mannitol est généralement compris entre 1,8 et 2,3. Le rapport Laminaranes/Fucoïdanes est généralement compris entre 1,5 et 2. Le rapport Fucoïdanes/Mannitol est généralement compris entre 1,2 et 1,5.

De préférence, les algues brunes utilisées sont des laminaires, c'est-à-dire des algues du genre *Laminaria.* On utilise en particulier des *Laminaria hyperborea* ou des *Laminaria digitata.* On peut toutefois utiliser d'autres types d'algues brunes, et en particulier *Laminaria japonica, Sargassum sp., Ecklonia maxima, fucus sp, Lessonia sp., et Macrocystis sp.*

Dans un autre mode de réalisation, les algues brunes sont du genre Fucus. Dans un autre mode de réalisation, les algues brunes sont du genre *Ascophyllum.* On peut aussi utiliser des mélanges de ces algues brunes.

Dans un mode de réalisation préféré, l'extrait d'algues brunes comprend entre. 20 et 23% de mannitol, entre 39 et 42% de laminaranes et entre 20 et 25% de fucoidanes. Préférentiellement, il contient également entre 10 et 12% de composés inorganiques.

Dans un mode de réalisation préféré, cet extrait se présente sous la forme d'un extrait liquide (préférentiellement sur base aqueuse) sans éléments en suspension, d'une solution aqueuse ou d'une forme de poudre soluble dans un milieu aqueux. Le milieu aqueux est préférentiellement de l'eau.

Dans le mode de réalisation préféré, l'extrait d'algue brune est susceptible d'être obtenu par une méthode telle que décrite ci-après, qui fait également partie de l'invention.

On obtient en effet l'extrait d'algues brunes par une méthode d'extraction. Cette méthode comprend les étapes de
a. Broyage d'un échantillon algues brunes,
b. Suspension du broyat dans une solution acide pendant une durée supérieure à 2 heures, la solution acide présentant un pH inférieur ou égal à 5, et pendant une durée de 6 heures au maximum
c. Récupération de la fraction liquide, préférentiellement par centrifugation ou filtration.
c1 Extraction complémentaire de l'extrait

Ainsi, Ce procédé peut aussi comprendre également les étapes ultérieures de
d. Génération d'un précipité par ajout d'alcool dans la fraction liquide récupérée en c,
e. Récupération du précipité
f. Suspension du précipité dans une solution aqueuse, séchage et/ou lyophilisation du précipité.

Alternativement, ce procédé peut comprendre les étapes ultérieures de :
d. Filtration de la fraction liquide récupérée en c,
e. Récupération du rétentat après filtration
f. Suspension du rétentat dans une solution aqueuse, séchage et/ou lyophilisation du rétentat.

L'échantillon d'algues brunes peut être un échantillon d'algues fraîches, c'est-à-dire récoltées et qui n'ont pas été soumises à une étape de séchage. Si un tel échantillon doit être utilisé, il est préféré que les algues aient été récoltées au plus 24 heures avant utilisation. En effet, il existe un risque de dégradation des composés actifs dans un échantillon d'algues fraîches, non séchées, si cet échantillon est utilisé après plusieurs jours. Si l'extrait doit être préparé après récolte des algues, on préfère alors sécher celles-ci, afin de limiter l'altération de leurs actifs. Cette étape de séchage peut être effectuée par toute méthode connue dans l'art, en particulier à basse température juste après récolte ce qui permet de préserver au mieux la conformation biochimique de composés actifs et ainsi leur fonctionnalité. On utilise donc préférentiellement des algues sèches.

Le broyage de l'échantillon est effectué, par exemple en utilisant un broyeur/microniseur classique afin d'obtenir des particules d'une taille de l'ordre du millimètre.

Après broyage de l'échantillon d'algues, on suspend le broyat dans une solution acide. Cette solution acide présente un pH inférieur ou égal à 5, de préférence inférieur ou égal à 4, de préférence, inférieur ou égal à 3. On utilise de préférence un acide carboxylique faible, présentant en particulier de 4 à 8 atomes de carbones, et de une à trois fonctions acide. On préfère en particulier les acides présentant une chaîne carbonée principale de 4 à 6 atomes de carbones, et 2 ou 3 fonctions acide. On utilise en particulier l'acide citrique (C₆H₈O₇, CAS 77-92-9 (anhydre) ou 5949-29-1 (monohydrate)), voire l'acide isocitrique (CAS 320-77-4). On peut toutefois aussi utiliser des acides forts dilués, en particulier l'acide sulfurique ou l'acide phosphorique.

L'incubation du broyat d'échantillon d'algues brunes est effectuée pendant au moins deux heures, mais peut être prolongée. Cette incubation est effectuée au maximum pendant 6 heures, de préférence environ 3 heures (soit entre 2h45 et 3h15 ou entre 2h50 et 3h10, ou entre 2h55 et 3h05). Dans un mode de réalisation particulier, cette incubation est réalisée à température ambiante. Dans un autre mode de réalisation, l'incubation est réalisée à une température comprise entre 55°C et 80°C, en particulier entre 65°C et 75°C.

L'extrait liquide est alors récupéré après incubation. On peut éliminer la fraction solide par centrifugation (ce qui est la méthode préférée) ou par filtration avec un seuil de coupure à 200µm maximum.

Dans un mode de réalisation préféré, on soumet l'extrait liquide acide récupéré à une étape complémentaire d'extraction d'actifs. Dans ce mode de réalisation, on induit une précipitation d'actif par addition d'une solution d'alcool dans l'extrait liquide, et récupération du précipité. L'alcool est préférentiellement l'éthanol ou isopropanol. En particulier, l'étape de précipitation à l'alcool peut être effectuée avec un alcool à une température de l'ordre de -20°C à 0°C. L'alcool utilisé est généralement utilisé pur (alcool absolu).

Le précipité obtenu peut alors être séché, lyophilisé, ou être remis en suspension dans une solution aqueuse.

Alternativement, on peut effectuer une étape de filtration (en particulier d'ultrafiltration ou de filtration sur membrane) avec un seuil de coupure de 20kDa (seuls les éléments inférieurs à 20kDa passent par la membrane), éventuellement de 25kDa, voire de 30kDa. On récupère le rétentat (fraction qui n'est pas passée par les pores de la membrane), qui peut être séché, lyophilisé, ou conservé en suspension dans une solution aqueuse.

Sans être lié par cette théorie, il est supposé que le procédé d'extraction permet d'obtenir des concentrations optimales d'actifs bénéfiques dans l'extrait obtenu, ainsi que des rapports entre les différents composés actifs qui permettent d'obtenir une synergie d'effet sur la croissance bactérienne, ainsi que montré dans les exemples. Ainsi, le procédé d'extraction permet d'augmenter la teneur en laminaranes et en mannitol dans les extraits obtenus, ce qui semble s'avérer positifs pour ce qui est des effets sur la croissance des bactéries.

L'invention se rapporte ainsi à un extrait d'algue brune, susceptible d'être obtenu par un procédé tel que décrit plus haut.

Les extraits d'algues brunes ainsi obtenus présentent une composition telle que définie ci-dessus.

Ils peuvent être mélangés à tout excipient acceptable pour une utilisation dans le domaine agricole, c'est-à-dire compatible dans son application aux végétaux et acceptable par ces derniers. On peut ainsi citer un excipient choisi parmi les solvants, les tensio-actifs, les adhésifs, les agents émulsifiants, les stabilisants, les charges, notamment minérales, les diluants, les épaississants, les agents anti-lessivages.

L'invention se rapporte ainsi à une formulation ou composition contenant l'extrait d'algues brunes décrit plus haut, et qui peut donc comprendre, en outre, des supports, des diluants et/ou des excipients appropriés, ainsi qu'à l'utilisation d'un tel extrait d'algues brunes pour la préparation d'une composition biostimulante ou fertilisante. Cette composition est biostimulante ou fertilisante, en ce qu'elle présente un tel effet de biostimulation ou de fertilisation des sols. En particulier, on pense que la fertilisation des sols est liée à la capacité de la formulation de stimuler la croissance de bactéries bénéfiques pour les plantes.

À titre d'illustration, on peut citer, en tant que supports, diluants et/ou excipients des sels tels que le chlorure de potassium, le sulfate de potassium, le sorbate de potassium, le citrate de potassium, le sulfate de sodium, le métabisulfite de sodium, le citrate de sodium, le carbonate de calcium, le benzoate de calcium, le phosphate de calcium. On peut aussi utiliser d'autres éléments tels que la maltodextrine, le gypse ou la bentonite, des alcools tels que l'éthanol, le butanol, l'alcool isopropylique, des acides tels que l'acide acétique, l'acide lactique. On peut aussi utiliser des combinaisons de ces éléments.

Dans un mode de réalisation préféré, la formulation se présente sous forme liquide.

Dans un autre mode de réalisation, la formulation se présente sous forme solide, notamment dans une pâte ou coque servant à enrober ou pelliculer des semences. Ainsi, l'extrait d'algues brunes peut être utilisé pour le traitement de semences. On formule un produit de traitement de semences en ajoutant l'extrait d'algues brunes à des formulants, adjuvants, agents pelliculants connus dans l'art. Ces composés n'ont pas d'effet biologique et sont utilisés notamment pour assurer une bonne tenue de la substance active sur la graine, ainsi qu'un bon recouvrement de la semence. Ainsi, on effectue le pelliculage en mélangeant l'extrait d'algues brunes avec un formulant et/ou un agent pelliculant. Puis on pulvérise le mélange sur les semences, pour application sur les graines, l'homogénéisation étant ensuite réalisée généralement dans des mélangeurs statiques. On utilise, en tant que formulant, des solvants organiques ou de l'eau, des dispersants, des émulgateurs, des tensioactifs ou des mouillants, des colorants... Les pelliculants sont utilisés pour appliquer un film microporeux à la surface de la semence. Ils permettent d'améliorer la couverture de la graine et l'homogénéité du recouvrement par la substance active. Ils peuvent également faciliter l'écoulement des semences dans le semoir. Les enrobants peuvent modifier la forme, la taille et/ou le poids de la semence, ce qui permet d'améliorer la précision du semis. Un extrait d'algues brunes peut être intégré à cet enrobant. On peut effectuer un pelliculage monocouche ou répéter les étapes de pelliculage pour obtenir un pelliculage multicouche et augmenter ainsi la dose pour obtenir une dose optimale. Le pelliculage peut également contenir d'autres éléments comme des traitements phytosanitaires.

L'invention se rapporte également à un procédé pour améliorer la croissance de plantes comprenant l'étape d'administration d'un extrait d'algues brunes tel que décrit plus haut ou d'une composition biostimulante contenant ledit extrait sur le milieu sur lequel les plantes sont cultivées.

Les volumes d'applications directement dans les sols sont dépendants de la concentration en composants actifs issus de l'extraction. Les taux de dilutions par volume d'eau seront cependant dans la gamme de 0,05% à 5% (0.5 g/L à 50 g/L d'extrait sec), plus particulièrement de 0,1 à 2% (1 g/L à 20 g/L d'extrait sec) pour assurer un effet sur la croissance bactérienne.

On peut aussi appliquer l'extrait d'algues brunes ou la composition biostimulante par infiltration dans le sol, par pulvérisation sur les feuilles de la plante, par application sur une semence avant le semis ou sur les racines d'une plantule, notamment par pralinage, avant sa plantation.

Une composition pour pralinage peut contenir l'extrait d'algues brunes, ainsi que tout autre composé connu dans l'art, tel qu'un polymère hydrophile non phytotoxique, notamment l'alcool polyvinylique, la polyvinylpyrrolidone, le polyacrylamide, l'acétate de polyvinyle, le propionate de polyvinyle, l'hydroxypropylméthylcellulose, la méthylcellulose ou la carboxyméthylcellulose. On peut aussi utiliser des gommes dans des formulations pour pralinage, en particulier la gomme xanthane ou la gomme arabique. L'amidon, en particulier les copolymères d'amidon avec des acrylamides, peut également être utilisé.

L'invention se rapporte également à un procédé pour améliorer la croissance de bactéries, comprenant l'étape d'administration d'un extrait d'algues brunes tel que décrit ci-dessus dans le milieu de culture des bactéries.

L'invention se rapporté également à un extrait d'algues brunes tel que décrit ci-dessus en tant que biostimulant, ou en tant qu'agent fertilisant. Il est rappelé qu'un agent fertilisant est une substance, utilisée en agriculture, en horticulture et sylviculture, permettant d'améliorer les sols, notamment leur structure, et fertiliser les plantes cultivées. Dans le cas présent, l'extrait n'apporte pas directement des éléments nutritifs nécessaires aux plantes, mais permet l'amélioration des sols du fait de l'augmentation de la croissance des bactéries favorables, et capables d'améliorer la croissance des plantes.

L'invention se rapporte également à une composition biostimulante ou fertilisante comprenant un extrait d'algues brunes tel que décrit ci-dessus, ainsi qu'à l'utilisation d'un tel extrait d'algues brunes pour la préparation d'une composition biostimulante ou fertilisante.

### FIGURES

Figure 1 : Courbe de croissance d'une souche de *Bacillus megaterium* en présence de l'extrait généré à différentes concentrations
Figure 2 : Courbe de croissance d'une souche de *Pseudomonas fluorescence* en présence de l'extrait généré à différentes concentrations
Figure 3 : Courbe de croissance d'une souche de *Pseudomonas fulva* en présence de l'extrait généré à différentes concentrations

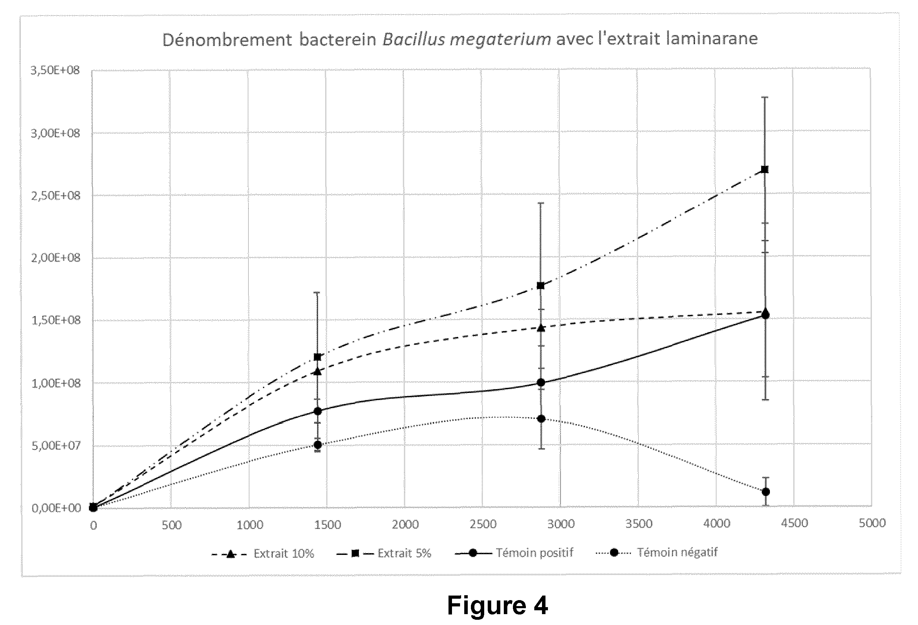

Figure 4 : Dénombrement de colonies bactériennes formées en milieu solide en présence de l'extrait généré à différentes concentrations.
Figure 5 : Compositions d'extraits obtenus dans des conditions de pH différentes. Barres de gauche : extraction avec un acide fort (similaire à celle décrite dans FR3025699A) ; barres du milieu : extraction avec un acide faible selon l'invention ; barres de droite : extraction en milieu alcalin (similaire à celle décrite dans GB2408045A).

### EXEMPLES

### Exemple 1. Obtention d'extrait d'algues

Les extractions ont été réalisées à partir d'algues sèches de type laminaire *(Laminaria).*

Une solution de 4% d'acide citrique (120g) dans un volume de 3I d'eau préalablement chauffée à 70°C a été préparée puis 300g d'algues sèches broyées ont été incorporées à cette solution. Elle a été agitée et maintenu à 70°C avec une hélice pendant 3h, puis la solution a été centrifugée pour récupérer la fraction liquide (extrait brut). Le surnageant de centrifugation a ensuite été concentré à un facteur de concentration volumique de 5 avant d'être précipité par deux volumes d'alcool absolu (éthanol) préalablement refroidi à -20°C. Après centrifugation, le précipité obtenu a été dissous dans une solution aqueuse (2 volumes d'eau pour 1 volume de précipité).

Dans un second exemple, l'extrait brut a été traité par ultrafiltration à un seuil de coupure de 30 kDa sur une membrane en polyethersulfone. Le rétentat est collecté et constitue l'extrait utilisé dans l'application définie. Le perméat n'est pas conservé.

### Exemple 2. Analyse des extraits

On a analysé les extraits redissous en eau.

On a trouvé, pour un extrait, la composition suivante :
Matière inorganique = 11.81% DW (matière sèche)
Mannitol = 22.29% DW
Fucoidanes = 25.61% DW
Laminaranes = 41.86% DW

Les pourcentages des différents composés étaient similaires pour d'autres extraits, obtenus à partir d'algues sèches ou fraîches quelle que soit la technique de purification utilisée (voir exemple 1).

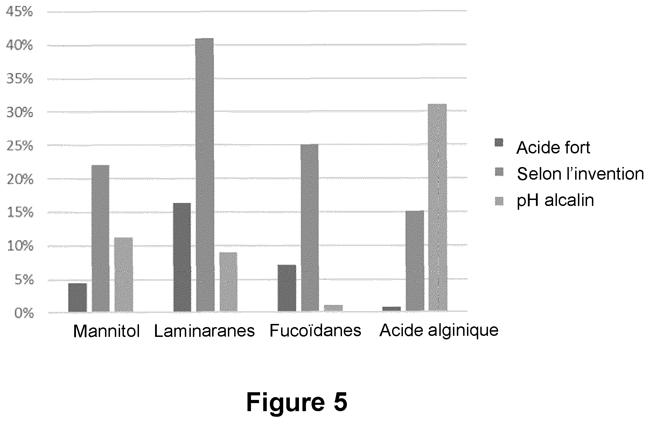

Des extraits ont été obtenus selon les méthodes similaires à celles décrites dans FR3025699A et GB2408045A. L'analyse des extraits obtenus montre que la composition diffère selon la méthode d'extraction (Figure 5). On a extrait les composés en utilisant une température maintenue à 70°C pendant 3 heures et une séparation de la fraction insoluble par centrifugation à 4000rpm pendant 15 minutes. On a fait varier le solvant d'extraction, et notamment son pH, en effectuant une extraction à l'acide fort avec un pH ajusté avec de l'acide sulfurique et une extraction alcaline en ajustant le pH à 11 avec de la potasse.

On observe que l'extraction selon la méthode selon l'invention permet d'augmenter le taux de mannitol, de laminaranes et de fucoïdanes dans l'extrait d'algues obtenu.

### Exemple 3. Croissance en milieu liquide

On a déterminé l'effet de l'ajout dans un milieu de culture solide, des extraits d'algues sur la cinétique de croissance de sept espèces bactériennes à effet PGPR (*Plant-Growth Promoting Rhizobacteria*) reconnu : *Bacillus megaterium, Bacillus subtilis, Rhizobium leguminosarum, Azotobacter vinelandii, Pseudomonas fluorescens, Pseudomonas fulva, Arthrobacter agilis.*

Le milieu de culture nutrient broth NB (Sigma-Aldrich) à 25g/L a été utilisé pour la multiplication des bactéries suivantes : *Bacillus subtilis, Bacillus megaterium, Arthrobacter agilis, Pseudomonas fluorescens, Pseudomonas fulva.* Le milieu YMA (Sigma-Aldrich)) sans agar a été utilisé pour la bactérie *Rhizobium leguminosarum.*

Des tests en microplaques de 96 puits stériles à fonds ronds ont été effectués. Une absorbance comprise entre 0,06 à 0,08 (600 nm) pour l'inoculation des bactéries dans la microplaque a été retenue dans le cadre de ces essais.

L'ensemencement des microplaques comprenait un blanc, un témoin positif, un témoin négatif et les échantillons.

### Témoin positif

Le témoin positif était composé de bactéries et de milieu de culture optimum (nutrient broth NB), afin de vérifier une bonne multiplication des bactéries se dans les microplaques.

### Témoin négatif

Le témoin négatif était composé d'eau distillée stérilisée dépourvu d'éléments carbonés avec 20µl de bactéries inoculées avec leur milieu de culture NB, afin de déterminer comment se comportait la croissance bactérienne dans un milieu appauvri en tout élément carboné.

### Blanc

Le blanc était composé d'eau distillée dépourvu de bactéries afin de déterminer les éventuelles variations d'absorbance et les potentielles contaminations bactériennes.

### Echantillons

Les différents tests d'extraits d'algues étaient composés d'eau distillée stérile avec les solutions testées aux différentes concentrations (66µl) auxquelles étaient ajoutés 20µl de bactéries.

Les différents extraits d'algues testés sont : mannitol commercial, laminaranes commercial, composition selon l'invention (laminaranes extrait).

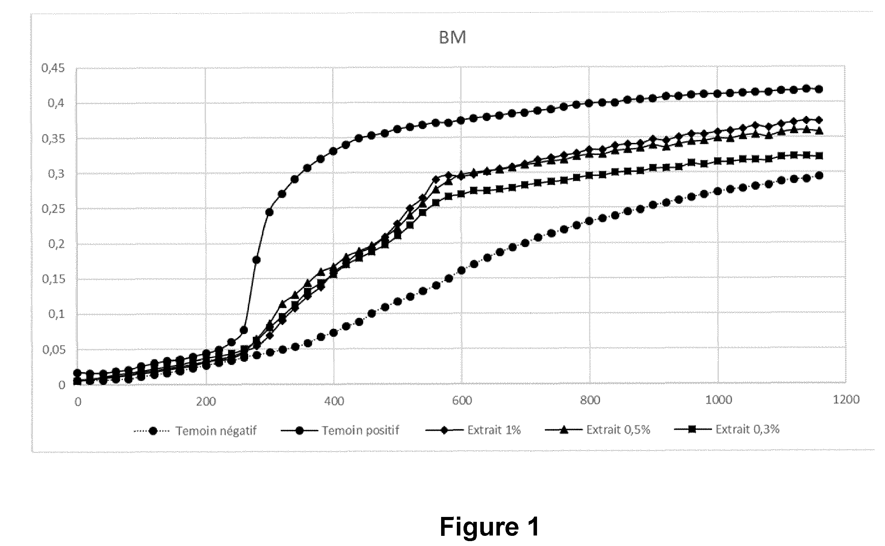

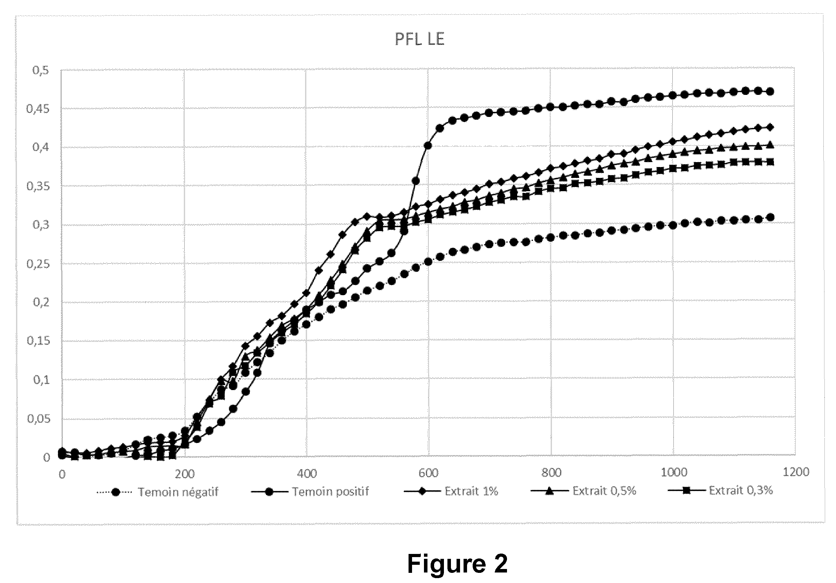

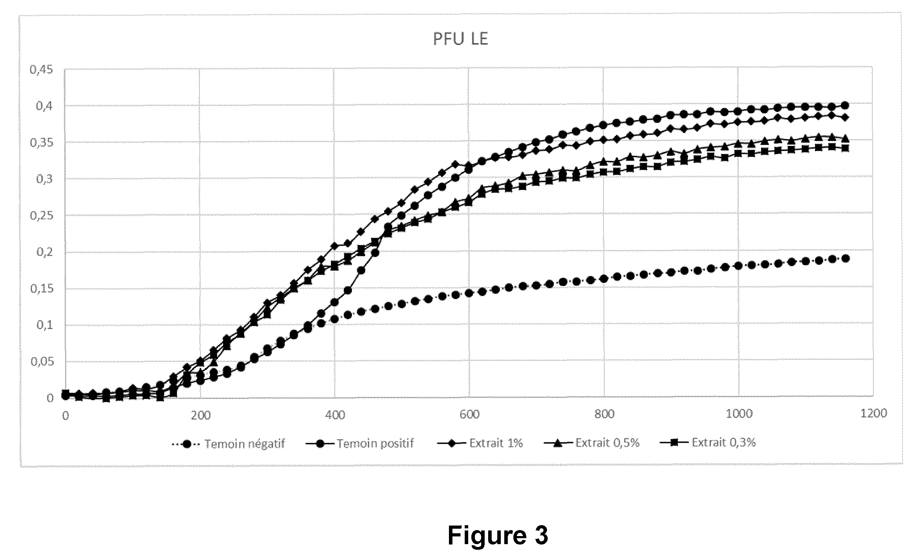

Les figures 1 à 3 montrent une croissance des souches bactériennes en milieu liquide en utilisant uniquement l'extrait généré comme source de carbone pour différentes bactéries.

Les tests ont permis de montrer que les bactéries sont arrivées à se multiplier avec pour seule source de carbone les extraits d'algues créant une cinétique de croissance bactérienne. En effet, une concentration de l'extrait à 0.5% permet une croissance se rapprochant des conditions optimales de croissance (témoin positifs) et montre également une croissance significativement supérieure au témoin négatif (sans source de carbone).

L'utilisation de mannitol purifié (mannitol commercial pur à 99%) ou de laminarane standard (laminarane commercial pur 99.8%) a permis de ne montrer une interaction positive entre bactéries et les composés (courbe de croissance se situant entre le témoin négatif et le témoin positif) que pour des concentrations à 1% pour les bactéries *Bacillus megaterium, Pseudomonas fluorescens* et *Pseudomonas fulva* et une absence d'interaction entre les bactéries et les composés (courbe de croissance situé en-dessous du témoin négatif) pour les concentrations à 0.5% et 0.3%.

Différents extraits purifiés ont été testés pour leur capacité à être utilisés comme source de carbone. Lorsque les laminaranes sont utilisés seuls, on a observé qu'ils peuvent être utilisés comme source de carbone (augmentation de la croissance bactérienne) pour des concentrations à partir d'environ 1%. On a aussi observé que, plus la concentration est élevée, plus l'effet est important.

Lorsque le mannitol est utilisé comme seule source de carbone, on a observé un effet maximal pour une concentration de 1%, mais et un effet très faible ou peu d'effet pour des concentrations inférieures (0,1%) ou des concentrations supérieures (2%).

Les fucoïdanes n'ont pas semblé montrer de réel effet positif pour la croissance bactérienne, en particulier lorsque la concentration est supérieure à 0.1%. On a toutefois pu observer une petite amélioration de la croissance pour des concentrations de l'ordre de <0.01%.

Les alginates n'ont montré que peu d'effet sur la croissance bactérienne.

Un extrait d'algue commerciale d'algues brunes (ALGANACT^{™} EVP6 Ld de la Demanderesse), contenant les mêmes composés que ceux de l'invention, mais dans des proportions différentes (Mannitol : 10-11% ; Fucoïdanes : 2,5-3% ; Laminaranes : 5-5,5% ; Alginates : 24-25% ; autres composés organiques (peptides, lipides, pigments, acides aminés...) : 21,5-22,5% ; composés inorganiques : 34-35%), n'a pas montré d'effets bénéfiques pour la croissance bactérienne.

Comme montré ci-dessus, les compositions selon l'invention sont efficaces lorsqu'utilisées à une concentration de 0.5%, correspondant à des concentrations inférieures aux concentrations d'efficacité pour les composés individuels, montrant donc une certaine synergie entre les composants. Les concentrations obtenues dans les extraits selon l'invention, ainsi que les rapports entre chaque composants semblent donc optimaux pour obtenir une amélioration de croissance bactérienne, qui sera bénéfiques à la croissance des plantes, du fait de l'action favorable des bactéries.

### Exemple 4. Croissance en milieu solide

L'utilisation de vermiculite minérale naturelle exfoliée permet de simuler une croissance en milieu solide.

Quatre extraits d'algues et quatre bactéries ont été utilisés.

L'extrait a été testé à deux différentes concentrations, 5% et 10% Deux expériences complémentaires ont été réalisées en parallèle : le dénombrement des bactéries à des temps donnés et la quantification de la quantité de carbone utilisée par les bactéries pour se développer.

Dans ces expérimentations, 4g de vermiculite stérile (tamisée à 2mm afin d'homogénéiser le volume et la texture) dans des pots de 40ml avec ajout du milieu souhaité ont été testés. Les sept extraits d'algues testés séparément dans de l'eau, le témoin positif représenté par du milieu nutritif « nutrient broth (NB) », le témoin négatif représenté par l'eau seule et le blanc représenté par l'eau sans bactérie.

### Témoin positif

Le témoin positif était composé de bactéries et de milieu de culture optimum dilué au 1/5 (nutrient broth NB), afin de vérifier que les bactéries se multiplient en condition de sol solide vermiculite.

### Témoin négatif

Le témoin négatif était composé d'eau distillée stérilisée dépourvu d'élément carboné avec 2ml de bactéries inoculées avec leur milieu de culture NB dilué au 1/5, afin de déterminer comment se comporte la croissance bactérienne en milieu solide dans un milieu appauvri en tout élément carboné.

### Blanc

Le blanc était composé d'eau distillée dépourvu de bactéries afin de déterminer les éventuelles variations d'absorbance et les potentielles contaminations bactériennes.

### Echantillons

Les différents tests d'extraits d'algues étaient composés d'eau distillée stérile avec les solutions testées aux différentes concentrations avec un volume constant de 6.6ml et 2ml de bactéries.

Les mesures ont été faites après quatre durées d'incubation, T0h, T24h, T48h et T72h.

Les solutions d'extraits d'algues ont été diluées à 1% pour le mannitol standard (MS) et l'alginate commercial (AC) et à 2% pour les laminaranes standard (LS) et composition selon l'invention (laminaranes extrait (LE)).

Le dénombrement bactérien a été effectué en utilisant 5g de chaque pot, ajouté dans un tube contenant 45ml d'eau physiologique (9g NaCl pour 1l d'eau). Des dilutions ont été réalisées à 10⁻², 10⁻³, 10⁻⁴ (T0h) et 10⁻⁵, 10⁻⁶ et 10⁻⁷ (autres durées) dans 900µL d'eau physiologique avec une dilution en cascade en prélevant 100µl de la solution précédente. On a étalé 100µl de chaque dilution sur milieu R2A et compté les colonies après incubation de 48h.

La quantification de carbone a été effectuée avec un conductimètre permettant la mesure d'une conductivité électrique et thermique. Le carbone organique se minéralise sous la forme de CO2 piégé par l'hydroxyde de sodium. Le piégeage du carbone a été effectué avec de l'hydroxyde de sodium à 0,5N afin de piéger le carbone dégagé par les bactéries. La conductivité mesurée reflète la quantité de carbone piégé.

La composition selon l'invention montre en fin d'expérimentation une croissance de la bactérie *Bacillus megaterium* supérieure à la croissance observée sans extrait (0) et avec un extrait standard (extrait LS).

### Exemple 5. Croissance in vivo

On effectue des expériences *in vivo* sous serre.

L'essai est conduit en serre sur plants de laitue.
- L'essai a été conduit avec des pots de 7,5 L.
- La fertilisation est fixée au préalable sans ajouts pendant l'essai.
- Des bactéries bénéfiques ont été apportées au sol par arrosage en début d'essai.

Les bactéries séléctionnées sont *Bacillus megaterium, Pseudomonas fulva* et *Rhizobium leguminasorum.*
- Les extraits d'algues ont été apportés par arrosage avec une fréquence hebdomadaire.

Des tests de détection et quantification ciblés (qPCR) pour ces bactéries bénéfiques ont été développés.

En parallèle, un test de quantification moléculaire de la biomasse bactérienne totale présente dans un échantillon (marqueur 16S) a aussi été utilisé dans le cadre de cette étude.

Les solutions d'extraits d'algues ont été diluées à 2% pour les laminaranes standard (LS) et l'extrait selon l'invention.

### Plantes

Étape sur sol avec plants de laitue :
L'essai a été organisé en 3 modalités avec 10 répétitions indépendantes d'une plante.

Les deux extraits, appliqués avec 3 bactéries bénéfiques évalués au cours de l'essai ont été comparés à 1 modalité témoin : apport des bactéries seules.

Les modalités sont les suivantes :

| Modalité | Sol Nu/ Avec Plant | Traitement % | Bactéries | Analyses Marqueurs | Paramètre plants |
|---|---|---|---|---|---|
| 1 | Avec Plant | Extrait 1 30% | Mix 3 bactéries | 4 points cinétiques (en cours et fin d'essais) : 16S et 3 marqueurs cibles | Poids frais Matière séches |
| 2 | Avec Plant | Extrait 2 30% | Mix 3 bactéries | 4 points cinétiques (en cours et fin d'essais) : 16S et 3 marqueurs cibles | Poids frais Matière séche |
| 3 | Avec Plant | Eau | Mix 3 bactéries | 4 points cinétiques (en cours et fin d'essais) : 16S et 3 marqueurs cibles | Poids frais Matière séche |

### Tableau 1. Modalités d'expérimentations

Les premiers résultats montrent une amélioration de la croissance des plantes.

## Revendications

1. Extrait d'algues brunes, **caractérisé en ce qu'**il comprend entre 15 et 25% de mannitol, entre 35 et 45% de laminaranes et entre 20 et 30% de fucoidanes.

2. Extrait d'algues brunes selon la revendication 1, **caractérisé en ce qu'**il se présente sous la forme de solution aqueuse ou de poudre soluble dans un milieu aqueux.

3. Procédé d'obtention d'un extrait d'algues brunes selon l'une des revendications 1 à 2, **caractérisé en ce qu'**il comprend les étapes de
a. Broyage d'un échantillon d'algues brunes,
b. Suspension du broyat dans une solution acide pendant une durée supérieure à 2 heures, la solution acide présentant un pH inférieur ou égal à 5, et pendant une durée de 6 heures au maximum
c. Récupération de la fraction liquide,
c'. Extraction complémentaire de l'extrait.

4. Méthode selon la revendication 3, **caractérisée en ce que** l'extraction complémentaire de l'extrait comprend :
d. Génération d'un précipité par ajout d'alcool dans la fraction liquide récupérée en c,
e. Récupération du précipité
f. Suspension du précipité dans une solution aqueuse, séchage et/ou lyophilisation du précipité.

5. Méthode selon la revendication 3, **caractérisée en ce que** l'extraction complémentaire de l'extrait comprend :
d. Filtration de la fraction liquide récupérée en c,
e. Récupération du rétentat après filtration
f. Suspension du rétentat dans une solution aqueuse, séchage et/ou lyophilisation du rétentat.

6. Méthode selon l'une des revendications 3 à 5, **caractérisée en ce que** l'incubation est réalisée dans une solution acide d'acide citrique ou d'acide isocitrique.

7. Méthode selon l'une des revendications 3 à 6, **caractérisée en ce que** l'incubation est effectuée à une température comprise entre 55°C et 80°C.

8. Méthode selon l'une des revendications 3 à 7, **caractérisée en ce que** l'échantillon d'algues brunes de l'étape a) est un échantillon d'algues brunes sèches.

9. Procédé pour améliorer la croissance de plantes comprenant l'étape d'administration d'un extrait d'algues brunes selon l'une des revendications 1 à 2 sur le milieu sur lequel les plantes sont cultivées.

10. Procédé pour améliorer la croissance de bactéries, comprenant l'étape d'administration d'un extrait d'algues brunes selon l'une des revendications 1 à 2 dans le milieu de culture des bactéries.

11. Composition biostimulante ou fertilisante comprenant un extrait d'algues brunes selon l'une des revendications 1 à 2.

12. Utilisation d'un extrait d'algues brunes selon l'une des revendications 1 à 2 pour la préparation d'une composition biostimulante ou fertilisante.

## Patentansprüche

1. Braunalgenextrakt, **dadurch gekennzeichnet, dass** er zwischen 15 und 25 % Mannitol, zwischen 35 und 45 % Laminarane und zwischen 20 und 30 % Fucoidane enthält.

2. Braunalgenextrakt nach Anspruch 1, **dadurch gekennzeichnet, dass** er in Form einer wässrigen Lösung oder eines in einem wässrigen Medium löslichen Pulvers vorliegt;

3. Verfahren zur Gewinnung eines Braunalgenextrakts gemäß einem der Ansprüche 1 bis 2, **dadurch gekennzeichnet, dass** es die folgenden Schritte umfasst
a. Zerkleinern einer Probe von Braunalgen,
b. Suspension des zerkleinerten Materials in einer sauren Lösung für einen Zeitraum von mehr als 2 Stunden, wobei die saure Lösung einen pH-Wert von 5 oder weniger aufweist, und für maximal 6 Stunden
c. Gewinnung der flüssigen Fraktion,
c'. Weitere Extraktion des Extrakts.

4. Verfahren nach Anspruch 3, **dadurch gekennzeichnet, dass** die weitere Extraktion des Extrakts umfasst:
d. Bildung eines Niederschlags durch Zugabe von Alkohol zu der in c gewonnenen flüssigen Fraktion,
e. Gewinnung des Niederschlags
f. Suspendieren des Niederschlags in einer wässrigen Lösung, Trocknung und/oder Gefriertrocknung des Niederschlags.

5. Verfahren nach Anspruch 3, **dadurch gekennzeichnet, dass** die weitere Extraktion des Extrakts umfasst:
d. Filtration der in c gewonnenen flüssigen Fraktion,
e. Gewinnung des Retentats nach der Filtration
f. Suspension des Retentats in einer wässrigen Lösung, Trocknung und/oder Gefriertrocknung des Retentats.

6. Verfahren nach einem der Ansprüche 3 bis 5, **dadurch gekennzeichnet, dass** die Inkubation in einer sauren Lösung von Zitronensäure oder Isocitronensäure durchgeführt wird.

7. Verfahren nach einem der Ansprüche 3 bis 6, **dadurch gekennzeichnet, dass** die Inkubation bei einer Temperatur zwischen 55 °C und 80 °C durchgeführt wird.

8. Verfahren nach einem der Ansprüche 3 bis 7, **dadurch gekennzeichnet, dass** die Braunalgenprobe aus Schritt a) eine trockene Braunalgenprobe ist.

9. Verfahren zur Verbesserung des Pflanzenwachstums, umfassend den Schritt der Zugabe eines Braunalgenextrakts gemäß einem der Ansprüche 1 bis 2 zu dem Medium, auf dem die Pflanzen gezüchtet werden.

10. Verfahren zur Förderung des Wachstums von Bakterien, umfassend den Schritt der Zugabe eines Braunalgenextrakts gemäß einem der Ansprüche 1 bis 2 zu dem Kulturmedium der Bakterien.

11. Biostimulierende oder düngende Zusammensetzung, umfassend einen Braunalgenextrakt gemäß einem der Ansprüche 1 bis 2.

12. Verwendung eines Braunalgenextrakts gemäß einem der Ansprüche 1 bis 2 zur Herstellung einer biostimulierenden oder düngenden Zusammensetzung.

## Claims

1. Brown algae extract, **characterized in that** it comprises between 15 and 25% of mannitol, between 35 and 45% of laminarans and between 20 and 30% of fucoidans.

2. The brown algae extract according to claim 1, **characterized in that** it is in the form of an aqueous solution or a powder soluble in an aqueous medium.

3. Method for obtaining a brown algae extract according to one of claims 1 to 2, **characterized in that** it comprises the steps of
a. Grinding a sample of brown algae,
b. Suspension of the ground material in an acidic solution for a period of more than 2 hours, the acidic solution having a pH of 5 or less, and for a maximum of 6 hours
c. Recovery of the liquid fraction,
c'. Further extraction of the extract.

4. The method according to claim 3, **characterized in that** the further extraction of the extract comprises :
d. Generation of a precipitate by adding alcohol to the liquid fraction recovered in c,
e. Recovery of the precipitate
f. Suspension of the precipitate in an aqueous solution, drying and/or freeze-drying of the precipitate.

5. The method according to claim 3, **characterized in that** the further extraction of the extract comprises :
d. Filtration of the liquid fraction recovered in c,
e. Recovery of the retentate after filtration
f. Suspension of the retentate in an aqueous solution, drying and/or freeze-drying of the retentate.

6. The method according to any one of claims 3 to 5, **characterized in that** incubation is carried out in an acid solution of citric acid or of isocitric acid.

7. The method according to any one of claims 3 to 6, **characterized in that** incubation is carried out at a temperature of between 55°C and 80°C.

8. The method according to any one of claims 3 to 7, **characterized in that** the brown algae sample from step a) is a dry brown algae sample.

9. A method of improving plant growth comprising the step of administering a brown algae extract according to any one of claims 1 to 2 to the medium on which the plants are grown.

10. A method for enhancing the growth of bacteria, comprising the step of administering a brown algae extract according to any one of claims 1 to 2 into the culture medium of the bacteria.

11. A biostimulant or fertilizing composition comprising a brown algae extract according to any one of claims 1 to 2.

12. Use of a brown algae extract according to any one of claims 1 to 2 for the preparation of a biostimulant or fertilizing composition.
